# EUROPÄISCHE PATENTSCHRIFT

(11) **EP 1 876 406 B1**
(45) Veröffentlichungstag und Bekanntmachung des Hinweises auf die Patenterteilung: **28.09.2016**
(21) Anmeldenummer: 07012888.9
(22) Anmeldetag: 02.07.2007
(51) Int. Cl.: F28D 9/00, F28F 9/02, F28F 19/01, B01D 35/30, F01M 11/03

(54) **Wärmetauscher-Filter-Anordnung, insbesondere für ein Kraftfahrzeug**
Heat exchanger filter assembly, in particular for a motor vehicle
Agencement de filtre d'échangeur thermique, en particulier pour un véhicule automobile

(30) Priorität: 06.07.2006 DE 102006031608
(43) Veröffentlichungstag der Anmeldung: 09.01.2008
(73) Patentinhaber: MAHLE Behr GmbH & Co. KG, 70469 Stuttgart (DE)
(72) Erfinder: Schleier, Gerd, 71409 Schwaikheim (DE); Richter, Jens, 71723 Grossbottwar (DE)
(74) Vertreter: Grauel, Andreas

(56) Entgegenhaltungen:
- EP-A- 1 403 475
- EP-A1- 0 816 645
- WO-A-2006/097086
- DE-U1-202004 015 748
- US-A- 5 351 664
- US-A1- 2004 132 359

## Beschreibung

Die Erfindung betrifft eine Wärmetauscher-Filter-Anordnung, insbesondere wie sie üblicherweise bei Kraftfahrzeugen verwendet wird, gemäß dem Oberbegriff von Anspruch 1.

Aus der DE 195 19 740 A1 ist ein Wärmetauscher bekannt, der aus mehreren parallel zueinander angeordneten Rohren zur Führung eines Mediums sowie aus lamellenartig und senkrecht zu den Rohren angeordneten plattenförmigen Wärmetauscherelementen besteht. Die Wärmetauscherelemente sind mit den Rohren fest verbunden, wobei diese ferner an den Außenkanten umgebogen sind und schuppenförmig übereinander liegen. Die Zuführung des zu kühlenden Mediums erfolgt über senkrecht zu den Wärmetauscherelementen angeordneten Rohren. Diese Rohre münden in eine Verteilerplatte, welche einen Flüssigkeitszulauf und einen Flüssigkeitsablauf aufweist. In der Verteilerplatte ist ferner der Zulauf und/oder der Ablauf für das Kühlmedium vorgesehen.

Ein Beispiel eines Spin-on-Ölfilters ist beispielsweise aus der DE 40 36 191 A1 bekannt. Derartige Filter werden üblicherweise an dem Motorblock eines Kraftfahrzeugs angeschraubt und dienen der Reinigung des Motoröls.

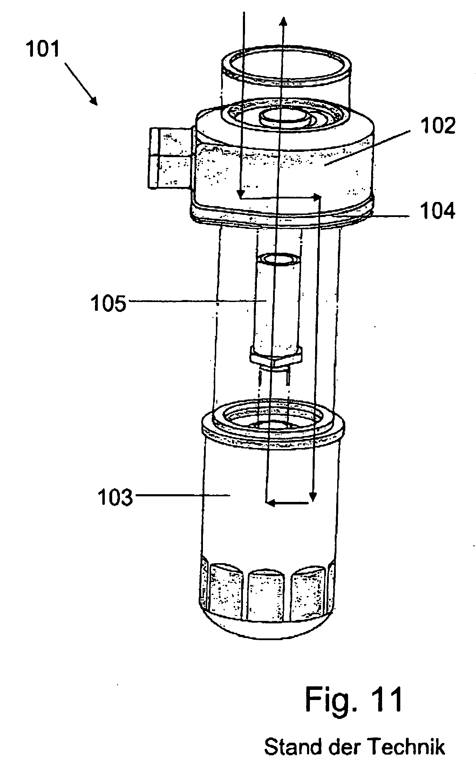

In Fig. 11 ist in einer Explosionsdarstellung eine bekannte Wärmetauscher-Filter-Anordnung 101 mit einem Stapelscheiben-Ölkühler 102 und einem Spin-on-Filter 103 dargestellt, wobei der Ölkühler 102 an einem Motorblock (nicht dargestellt) mittels einer zentralen Schraube 105 angebracht ist. Zwischen dem Ölkühler 102 und dem Filter 103 ist ein Übergangsbereich 104 angeordnet, in welchem das vom Wärmetauscher kommende Öl auf eine Art Ringspalt, gebildet durch das Gehäuse des Filters 103 und die entsprechende Außenfläche des Ölkühlers 102, verteilt wird und über denselben in den Filter 103 gelangt. Hierbei wird der Spin-on-Filter 103, bei dem es sich um ein Wechselteil handelt, auf die zentrale Schraube 105 außenseitig aufgeschraubt. Hierbei besteht der Ölkühler 102 aus einem Gehäuse, den runden Wärmetauscherplatten und den Anschlüssen. Filter 103 und Ölkühler 102 sind stapelartig um die zentrale Schraube 105 angeordnet. Die Strömungsführung in derartigen Ölkühlern lässt nur mäßige Wärmetauscherleistungen zu.

Eine ähnliche Wärmetauscher-Filter-Anordnung ist aus der US 3,743,011 A bekannt.

Die nachveröffentlichte WO 2006/097086 A und die US 5,351,664 A offenbaren jeweils eine Filter-Kühler-Kombination gemäß Oberbegriff von Anspruch 1.

Eine derartige Wärmetauscher-Filter-Anordnung lässt noch Wünsche offen, insbesondere in Hinblick auf die Wärmetauscherleistung und die Herstellungskosten.

Es ist Aufgabe der Erfindung, eine verbesserte Wärmetauscher-Filter-Anordnung zur Verfügung zu stellen.

Diese Aufgabe wird gelöst durch eine Wärmetauscher-Filter-Anordnung mit den Merkmalen des Anspruchs 1. Vorteilhafte Ausgestaltungen sind Gegenstand der Unteransprüche.

Erfingdungsgemäß ist eine Wärmetauscher-Filter-Anordnung mit einem Wärmetauscher, insbesondere bevorzugt mit einem Ölkühler, und einem Spin-on-Filter, der auf eine zentrale Schraube aufschraubbar ist, wobei eine Verteilerplatte im Strömungsweg des den Wärmetauscher und den Filter durchströmenden Fluids zwischen dem Wärmetauscher und dem Filter vorgesehen ist, die mittels der zentralen Schraube an einem Motorblock anbringbar ist, wobei der Filter auf die durch die Verteilerplatte ragende zentrale Schraube außenseitig aufschraubbar ist und der Wärmetauscher seitlich beabstandet von der zentralen Schraube und neben dem Filter angeordnet ist.

Die Verteilerplatte weist erfindungsgemäß drei oder mehr als drei plattenförmige Elemente auf, welche insbesondere durch Blechstanzteile gebildet werden, wobei jeweils ein Eintritts-Kanal und ein Austritts-Kanal in einem mittleren plattenförmigen Element ausgebildet ist, und die äußeren plattenförmigen Elemente die Eintritts- und Austrittsöffnungen für das durchgeführte Medium zur Verfügung stellen und das mittlere plattenförmige Element eine Umlenkung des Mediums in einer Richtung senkrecht zur Ein- bzw. Austrittsströmungsrichtung des Mediums vorsieht.

Alternativ kann die Verteilerplatte auch zumindest teilweise durch ein Gussteil, insbesondere durch ein Druckguss- und/oder Spritzgussteil gebildet werden, in welchem Kanäle ausgebildet sind, wobei die Kanäle eine Umlenkung des Mediums in einer Richtung senkrecht zur Ein- bzw. Austrittsströmungsrichtung des Mediums vorsehen.

Die Anordnung des Wärmetauschers neben und nicht stapelförmig in Reihe mit dem Filter vereinfacht die konstruktive Ausgestaltung und wird zudem - in Hinblick auf die Ausgestaltung des Wärmetauschers - flexibler. Dabei kann der Wärmetauscher ohne Abänderung der anderen Bauteile variiert und an den Kühlbedarf angepasst werden, insbesondere bevorzugt durch eine Veränderung der Scheibenanzahl. Ferner können - im Vergleich mit den bekannten, bei dieser Anwendung üblicherweise verwendeten Rundscheibenkühlern - durch die Verwendung von Stapelscheibenkühlern bessere Kühlleistungen realisiert werden. Eine bauliche Veränderung des Motorblocks ist nicht erforderlich.

Der Wärmetauscher ist vorzugsweise mit der Verteilerplatte oder zumindest einem Teil der Verteilerplatte verlötet oder verschweißt. Ebenfalls ist - vorzugsweise unter Einlage von Dichtelementen - eine Verbindung mittels Schrauben möglich.

Bevorzugt ist der Filter derart auf die Verteilerplatte aufgeschraubt, dass der untere Rand des Filtergehäuses abdichtend auf der entsprechenden Fläche der Verteilerplatte anliegt. Durch das Vorsehen der Verteilerplatte kann auf relativ einfache Weise eine saubere und ebene Dichtfläche zur Verfügung gestellt werden, so dass Leckagen vermieden werden können.

Die Verteilerplatte weist vorzugsweise auf einer Seite zwei und auf der anderen Seite vier Ein- bzw. Austrittsöffnungen auf, jedoch kann die Anzahl der Öffnungen variiert werden, bspw. wenn ein Bypass zum Wärmetauscher vorgesehen ist, durch den das Medium direkt in den Filter, ohne ein Durchströmen des Wärmetauschers, gelangen kann.

Das Vorsehen eines Bypasses ist besonders vorteilhaft, um auch bei zähflüssigem Medium, insbesondere bei einem Kaltstart des Motors bei sehr niedrigen Außentemperaturen, eine ausreichende Schmierung sicherstellen zu können. Dabei lässt sich der Bypass sehr einfach realisieren, bspw. durch eine direkt durchgehende Bohrung vom Medieneintritt zum Filter. Ebenfalls kann ein Teilstrom vor der Umlenkung des Medienstroms direkt zum Filter abgezweigt werden. Die Teilströme werden im Filter wieder vereinigt und verlassen denselben bevorzugt über die zentrale Schraube auf an sich bekannte Weise.

Im Folgenden wird die Erfindung anhand mehrerer Ausführungsbeispiele unter Bezugnahme auf die beiliegende Zeichnung näher erläutert. Hierbei zeigen
- Fig. 1: eine perspektivische Ansicht einer erfindungsgemäßen Wärmetauscher-Filter-Anordnung an einem Motorblock gemäß dem ersten Ausführungsbeispiel,
- Fig. 2: eine vergrößerte Ansicht der Wärmetauscher-Filter-Anordnung von Fig. 1 ohne Filter,
- Fig. 3: eine andere perspektivische, explosionsartige Darstellung der Wärmetauscher-Filter-Anordnung von Fig. 1,
- Fig. 4: eine schematische explosionsartige Darstellung der einzelnen Bauteile einer Wärmetauscher-Filter-Anordnung von Fig. 1,
- Fig. 5: eine Explosionsdarstellung mit schematisch angedeutetem Strömungsverlauf des Motoröls der Wärmetauscher-Filter-Anordnung von Fig. 1,
- Fig. 6: eine schematische explosionsartige Darstellung einer Wärmetauscher-Filter-Anordnung gemäß dem zweiten Ausführungsbeispiel,
- Fig. 7: eine schematische explosionsartige Darstellung einer Wärmetauscher-Filter-Anordnung gemäß einem nicht erfindungsgemäßen Beispiel,
- Fig. 8: eine schematische explosionsartige Darstellung einer Wärmetauscher-Filter-Anordnung gemäß einem nicht erfindungsgemäßen Beispiel,
- Fig. 9: eine schematische explosionsartige Darstellung einer Wärmetauscher-Filter-Anordnung gemäß dem dritten Ausführungsbeispiel ohne Darstellung des Wärmetauschers,
- Fig. 10: eine schematische explosionsartige Darstellung einer Wärmetauscher-Filter-Anordnung gemäß dem vierten Ausführungsbeispiel, und
- Fig. 11: eine schematische explosionsartige Darstellung einer Wärmetauscher-Filter-Anordnung gemäß dem.Stand der Technik mit durch Pfeile angedeutetem Strömungsverlauf des Motoröls.

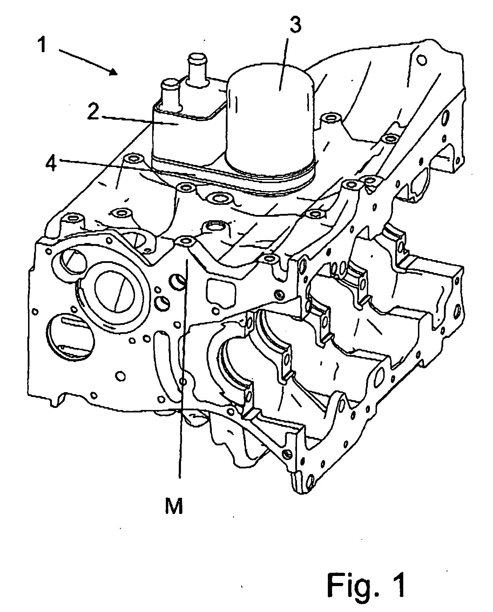

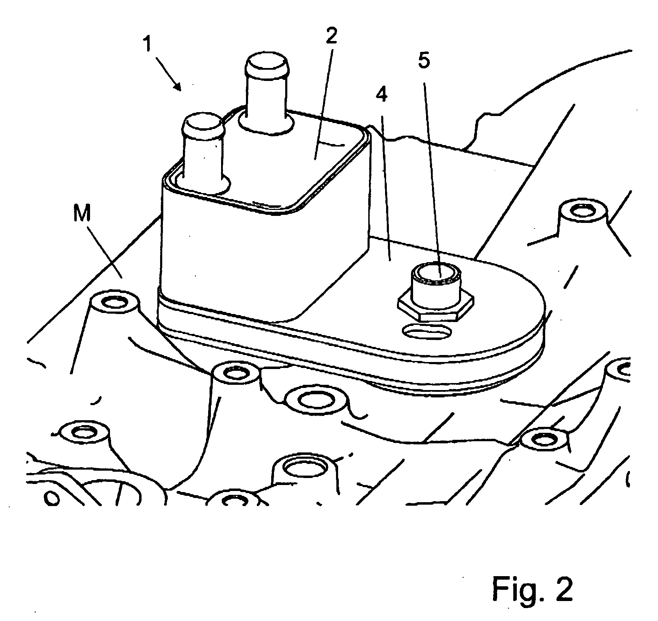

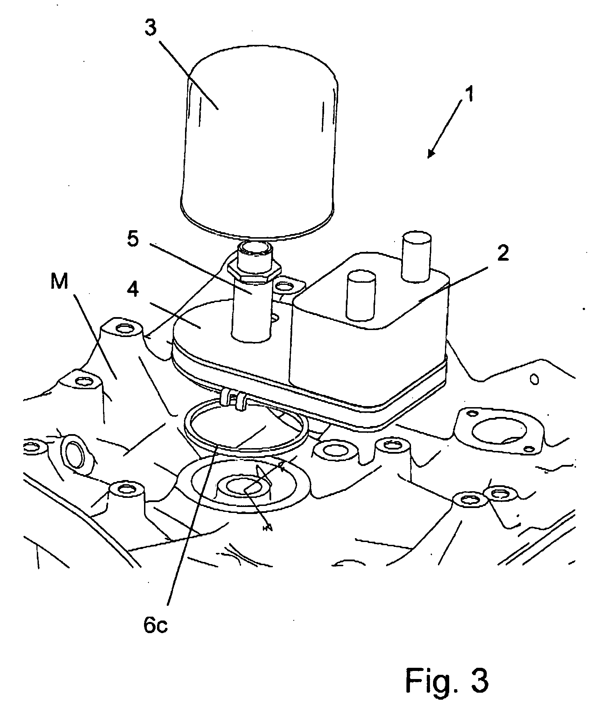

Eine Wärmetauscher-Filter-Anordnung 1 gemäß dem in den Figuren 1 bis 5 dargestellten, ersten Ausführungsbeispiel weist einen Wärmetauscher, vorliegend einen Stapelscheiben-Ölkühler 2, und einen Spin-on-Filter 3 auf. Der Ölkühler 2 ist im Unterschied zu bekannten Systemen mit dem Filter 3 über eine Verteilerplatte 4 verbunden, wobei die beiden Bauteile 2 und 3 auf derselben Seite der Verteilerplatte 4 angeordnet sind. Die Verteilerplatte 4 ist ihrerseits mittels einer zentralen, hohl ausgebildeten Schraube 5 mit Hilfe eines an der zentralen Schraube 5 ausgebildeten Sechskants und unter Zwischenlage einer Dichtung 6 an einem Motorblock M angeschraubt (siehe Fig. 2). Der Filter 3, bei dem es sich um ein Wechselteil handelt, ist auf die zentrale Schraube 5 auf ein an ihrem äußeren Ende vorgesehen Gewinde aufgeschraubt, wobei bei einem Wechsel des Filters 3 die Verteilerplatte 4 und der Ölkühler 2 am Motorblock verbleiben. Der untere Rand des Filtergehäuses ist bei ordnungsgemäß aufgeschraubtem Filter 3 in abdichtender Anlage an der Verteilerplatte 4 (siehe Fig. 1).

Die Verteilerplatte 4 besteht aus drei plattenförmigen Elementen 4a, 4b und 4c, vorliegend gebildet durch gestanzte Blechteile, wobei die äußeren Elemente 4a und 4c dünner ausgebildet sind als das innere Element 4b. Das obere plattenförmige Element 4a der Verteilerplatte 4 weist vier Durchbrüche auf, durch welche Öl in den Ölkühler 2, aus dem Ölkühler 2 heraus, in den Filter 3 und aus dem Filter heraus geleitet werden kann. Das mittlere plattenförmige Element 4b weist zwei Schlitze 4b' und 4b" und einen Durchbruch für die Durchführung der zentralen Schraube 5 auf. Das untere plattenförmige Element 4c weist zwei Durchbrüche 4c' und 4c" auf, wobei der Durchbruch 4c' der Einleitung des Öls und der Durchbruch 4c" der Durchführung der zentralen Schraube 5 sowie - innerhalb derselben - der Ausleitung des Öls dient.

Die zentrale Schraube 5 weist eine offene Durchgangsbohrung auf. Sie ist an beiden Enden mit Gewindebereichen versehen und im mittleren Bereich ist besagter Sechskant ausgebildet, mit Hilfe dessen sie in den Motorblock M fest eingeschraubt werden kann.

Die Dichtung 6 ist mehrteilig ausgebildet, wobei sie eine Lotscheibe 6a, einen Dichtsitz 6b und einen Dichtring 6c aufweist. Die Lotscheibe 6a dient der Verlötung von Verteilerplatte 4 und Dichtsitz 6b. Der Dichtring 6c dient der Abdichtung gegenüber dem Motorblock M oder ggf. einem anderen Bauteil und wird in der Regel nach dem Verlöten des Dichtsitzes 6b unter Zwischenlage der Lötscheibe 6a mit der Verteilerplatte 4 und des Ölkühlers 2 mit der Verteilerplatte 4 und dem Verlöten der zentralen Schraube 5 mit der Verteilerplatte 4 montiert, wobei das Verlöten der Bauteile 2, 4, 5 und 6 (außer dem Dichtring 6c) in einem Arbeitsgang erfolgt.

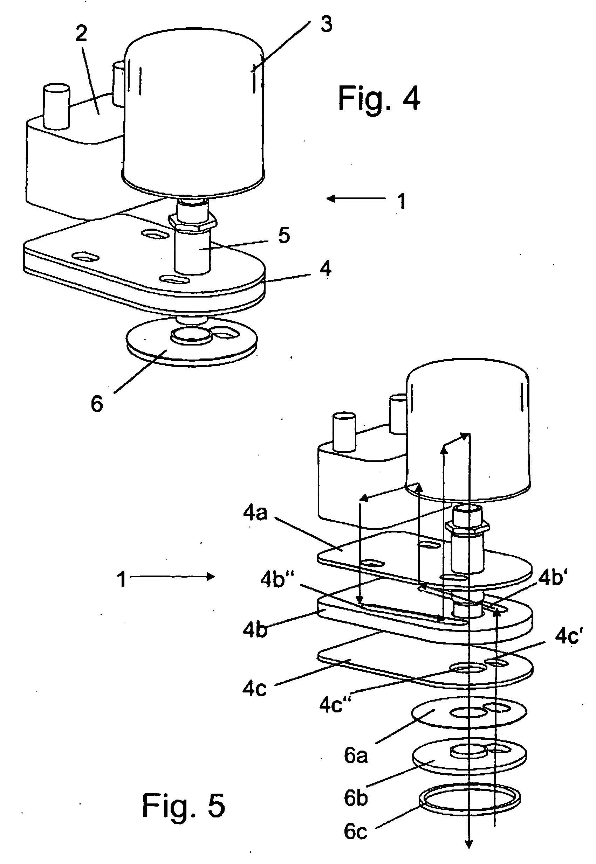

Der Strömungsverlauf des vom Motor kommenden Öls ist in Fig. 5 durch Pfeile dargestellt. Hierbei strömt das Öl durch die exzentrische Öffnung in der Dichtung 6 und den Durchbruch 4c' im unteren plattenförmigen Element 4c in den Schlitz 4b' des mittleren plattenförmigen Elements 4b. Ein Weiterströmen in gerader Richtung wird durch das obere plattenförmige Element 4a verhindert.

Im Schlitz 4b' wird das Öl senkrecht zur vorherigen Strömungsrichtung weitergeführt bis zum Ende des Schlitzes 4b', von wo es über den entsprechenden Durchbruch in dem oberen plattenförmigen Element 4a in den Ölkühler 2 gelangt. Nach dem Durchströmen desselben, wobei das Öl Wärme an ein Kühlmittel abgibt, welches ebenfalls den Ölkühler 2 durchströmt, strömt es - seitlich versetzt - durch einen zweiten Durchbruch im oberen plattenförmigen Element 4a in den zweiten Schlitz 4b" des mittleren plattenförmigen Elements 4b, wo wiederum eine Umlenkung in Schlitzlängsrichtung erfolgt. Am Ende des Schlitzes strömt das Öl durch einen dritten Durchbruch im oberen plattenförmigen Element 4a auf die Außenseite der Verteilerplatte 4, wo es sich auf einen Ringspalt des Filters 3 verteilt und denselben von außen nach oben und innen durchströmt. Im oberen Bereich des Filters 3 gelangt das gefilterte Öl in die durch die zentrale Schraube 5 verlaufende Bohrung, welche sie durchströmt und wieder dem Motorblock M zugeführt wird.

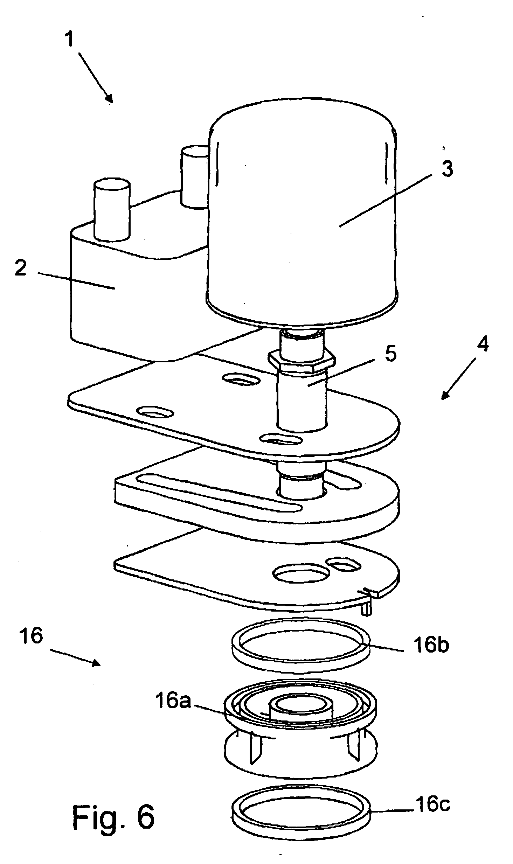

In Fig. 6 ist ein zweites Ausführungsbeispiel einer Wärmetauscher-Filter-Anordnung 1 dargestellt, welche zur Einstellung eines gewünschten, insbesondere eines bauraumbedingt erforderlichen Abstandes zwischen der Wärmetauscher-Filter-Anordnung 1 und dem Motorblock M anstelle der Dichtung 6 des ersten Ausführungsbeispiels ein Distanz- und Dichtelement 16 mit einem zentralen Körper 16a und zwei Dichtringen 16 und 16c aufweist. Der zentrale Körper 16a weist zur Aufnahme der Dichtringe 16a und 16b oben und unten je eine Ringnut auf. Ferner sind Durchlässe für das Öl vorgesehen, vorliegend in Form einer bereichsweise ringspaltähnlichen Öffnung und einer zentralen Bohrung für die Durchführung der zentralen Schraube 5. In den übrigen Bereichen, d.h. ab der Verteilerplatte 4 unterscheidet sich das zweite Ausführungsbeispiel nicht vom ersten Ausführungsbeispiel, so dass hierauf nicht näher eingegangen wird.

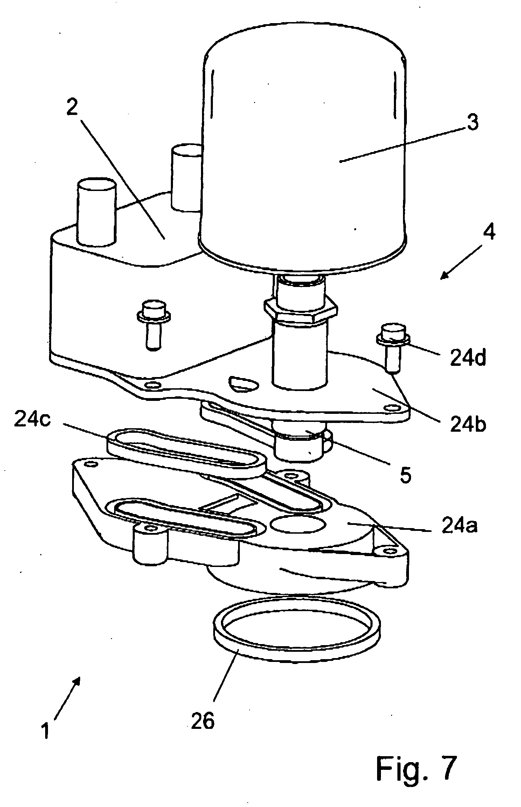

Gemäß dem in Fig. 7 dargestellten, nicht erfindungsgemäßen Beispiel ist die Verteilerplatte 4 im unteren Teilbereich als Druckgussteil oder als Spritzgussteil 24ä mit oben offenen Kanälen ausgebildet, wobei das Druckgussteil 24a durch ein plattenförmiges Element 24b abgedeckt ist, welches mit dem Wärmetauscher 2 und der zentralen Schraube 5 verlötet ist. Das Druckgussteil 24a und das plattenförmige Element 24b werden unter Zwischenlage von in entsprechenden Nuten im Druckgussteil 24a angeordneten Dichtringen 24c mittels vier oder ein bis vier oder mehr als vier Schrauben 24d, die durch Öffnungen im plattenförmigen Element 24b gesteckt und in im Druckgussteil 24a vorgesehene Gewinde eingeschraubt sind, miteinander im Rahmen einer Vormontage nach erfolgtem Verlöten des Wärmetauschers 2 und der zentralen Schraube 5 mit dem plattenförmigen Element 24b fest verbunden. Ferner ist am Druckgussteil 24a unten eine Nut (nicht dargestellt) für die Aufnahme eines weiteren Dichtelements 26 vorgesehen, welches das Druckgussteil 24a gegenüber dem Motorblock M oder einem anderen Bauteil abdichtet. Der Verlauf des Ölstroms entspricht demjenigen der zuvor beschriebenen Ausführungsbeispiele, so dass hierauf nicht näher eingegangen wird.

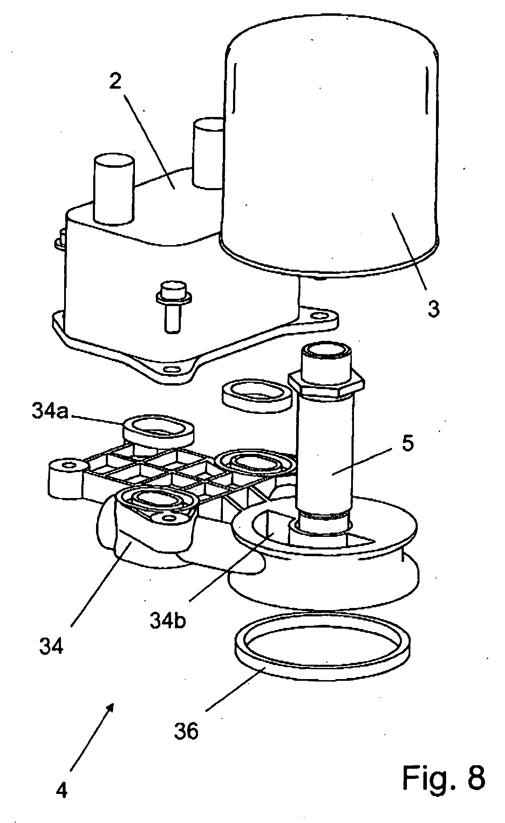

Fig. 8 zeigt als weiteres nicht erfindungsgemäßes Beispiel eine Verteilerplatte 4, welche als Druckgussteil oder Spritzgussteil 34 mit geschlossenen Kanälen ausgebildet ist. Der Wärmetauscher 2 wird unter Zwischenlage von Dichtringen 34a, die in entsprechenden Nuten der Verteilerplatte 4 angeordnet sind, hieran angeschraubt. Im Bereich des Filters ist im Druckgussteil 34 ein C-förmiger Durchbruch 34b für die Öleinleitung und im mittleren Bereich eine kreisförmige Öffnung für die zentrale Schraube 5 und die hierin ausgebildete Ölableitung vorgesehen. Plattenförmige Elemente sind auf Grund der geschlossenen Kanäle in diesem Fall nicht erforderlich. Ferner ist am Druckgussteil 34 unten eine Nut (nicht dargestellt) für die Aufnahme eines weiteren Dichtelements 36 vorgesehen, welches das Druckgussteil 34 gegenüber dem Motorblock M oder einem anderen Bauteil abdichtet. Der Verlauf des Ölstroms entspricht wiederum demjenigen der zuvor beschriebenen Ausführungsbeispiele, so dass hierauf nicht näher eingegangen wird.

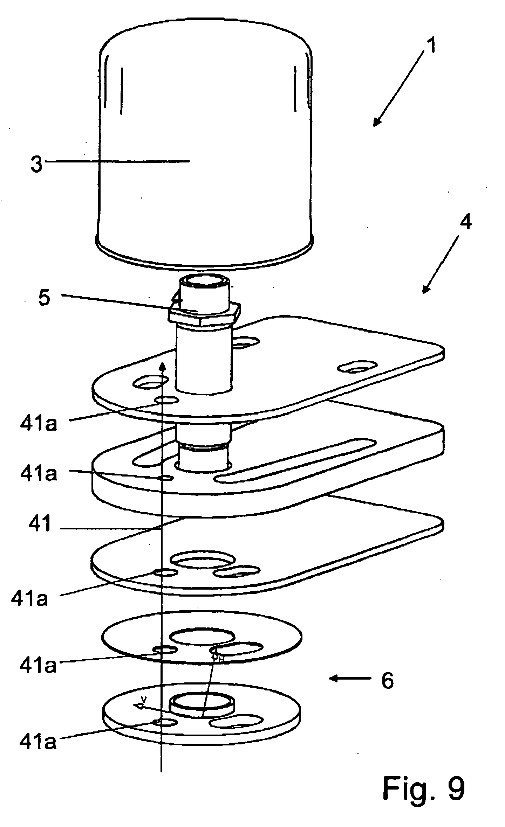

Gemäß dem dritten, in Fig. 9 dargestellten Ausführungsbeispiel, das - sofern nachfolgend nicht ausdrücklich beschrieben - dem ersten Ausführungsbeispiel entspricht, ist ein Bypass 41 in Form einer Reihe von miteinander fluchtenden Bohrungen 41a in der Verteilerplatte 4 und der Dichtung 6 ausgebildet, welche - insbesondere bei extrem kaltem und daher zähflüssigem Öl, bspw. im Falle eines Kaltstarts des Motors bei -20°C Außentemperatur, - ein Teilstrom des Öls direkt vom Motor zum Filter 3 gelangen kann, so dass eine (Not-)Schmierung des Motors gewährleistet ist. Der Rest des Ölstroms durchströmt die Wärmetauscher-Filter-Anordnung 1 auf die in Fig. 5 dargestellte Weise. Im Filter 3 treffen und vereinen sich die beiden Ölströme wieder, so dass sie gemeinsam über die Bohrung in der zentralen Schraube 5 ausströmen.

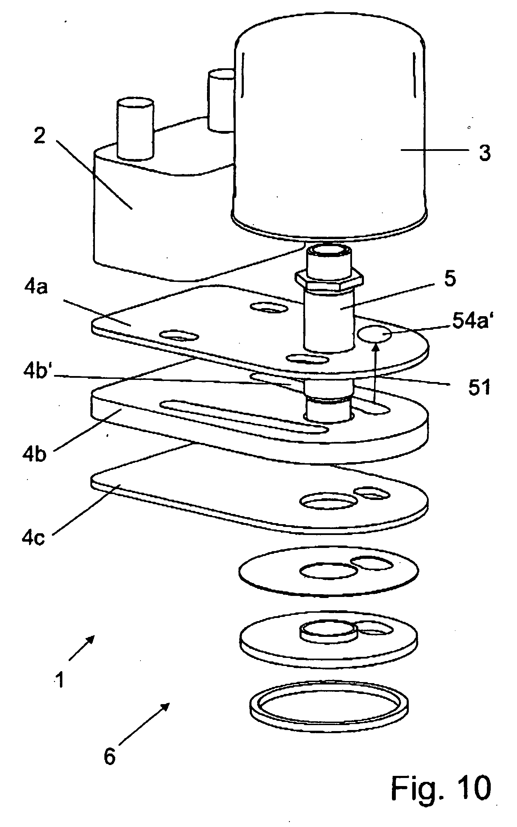

Fig. 10 zeigt das vierte Ausführungsbeispiel, wobei eine "kleine" Bypassvariante vorgesehen ist. Hierbei zweigt der Bypass 51 vom Schlitz 4b' im mittleren plattenförmigen Element 4b durch eine im oberen plattenförmigen Element 4a vorgesehene Bohrung 54a' direkt in den Filter 3 ab, d.h. das fünfte Ausführungsbeispiel unterscheidet sich vom ersten Ausführungsbeispiel lediglich durch die Bohrung 54a'. Somit strömt ein Teilstrom ab dem Eintritt in den Schlitz 4b' direkt über die Bohrung 54a' in den Filter 3, während der andere Teilstrom über den Schlitz 4b' den unter Bezugnahme auf Fig. 5 beschriebenen Weg nimmt. Im Filter 3 treffen und vereinigen sich die beiden Teilströme wieder.

## Patentansprüche

1. Wärmetauscher-Filter-Anordnung mit zumindest einem Wärmetauscher, insbesondere einem Ölkühler (2), und zumindest einem Spin-on-Filter (3), der auf zumindest eine Schraube (5) aufschraubbar ist, wobei zumindest eine Verteilerplatte (4) im Strömungsweg eines den Filter (3) und den zumindest einen Wärmetauscher durchströmenden Mediums zwischen dem zumindest einen Wärmetauscher und dem zumindest einen Filter (3) vorgesehen ist, die mittels der zumindest einen Schraube (5) an einem Motorblock (M) anbringbar ist, wobei der zumindest eine Filters (3) auf die zumindest eine durch die zumindest eine Verteilerplatte (4) ragende Schraube (5) aufschraubbar ist und der zumindest eine Wärmetauscher seitlich beabstandet von der zumindest einen Schraube (5) und neben dem zumindest einen Filter (3) angeordnet ist, **dadurch gekennzeichnet, dass** die zumindest eine Verteilerplatte (4) zumindest drei plattenförmige Elemente (4a, 4b, 4c) aufweist, wobei die äußeren plattenförmigen Elemente (4a und 4c) die Eintritts- und Austrittsöffnungen für das durchgeführte Medium zur Verfügung stellen und das innere zumindest eine plattenförmige Element (4b) eine Umlenkung des Mediums in einer Richtung senkrecht zur Ein- bzw. Austrittsströmungsrichtung des zumindest einen Mediums vorsieht, wobei jeweils zumindest ein Eintritts-Kanal und zumindest ein Austritts-Kanal in dem zumindest einen mittleren plattenförmigen Element (4b) ausgebildet ist.

2. Wärmetauscher-Filter-Anordnung nach Anspruch 1, **dadurch gekennzeichnet, dass** die zumindest eine Verteilerplatte (4) zumindest teilweise durch zumindest ein Gussteil (24a; 34), insbesondere Spritzgussoder Druckgussteil, gebildet ist, in welchem Kanäle ausgebildet sind, wobei die Kanäle eine Umlenkung des zumindest einen Mediums in einer Richtung senkrecht zur zumindest einen Ein- bzw. Austrittsströmungsrichtung des Mediums vorsehen.

3. Wärmetauscher-Filter-Anordnung nach einem der vorhergehenden Ansprüche, **dadurch gekennzeichnet, dass** der zumindest eine Wärmetauscher mit der zumindest einen Verteilerplatte (4) oder zumindest eidem Teil der zumindest einen Verteilerplatte stoffschlüssig verbunden, insbesondere verlötet oder verschweißt, ist.

4. Wärmetauscher-Filter-Anordnung nach einem der vorergehenden Anspruche, **dadurch gekennzeichnet, dass** der zumindest eine Filter (3) derart auf die zumindest eine Verteilerplatte (4) aufgeschraubt ist, dass der zumindest eine untere Rand des zumindest einen Filtergehäuses abdichtend auf der entsprechenden Fläche der zumindest einen Verteilerplatte (4) anliegt.

5. Wärmetauscher-Filter-Anordnung nach einem der vorhergehenden Ansprüche, **dadurch gekennzeichnet, dass** die zumindest eine Verteilerplatte (4) auf einer Seite zumindest zwei und auf der anderen Seite zumindest vier Ein-bzw. Austrittsöffnungen aufweist.

6. Wärmetauscher-Filter-Anordnung nach einem der vorhergehenden Ansprüche **dadurch gekennzeichnet, dass** zumindest ein Bypass (41; 51) zu dem zumindest einen Wärmetauscher ausgebildet ist, durch welchen ein Teil eines Medienstroms, mit welchem die zumindest eine Verteilerplatte (4) durchströmbar ist, direkt in den zumindest einen Filter (3) ohne Durchströmen des zumindest einen Wärmetauschers gelangt.

7. Wärmetauscher-Filter-Anordnung nach einem der vorhergehenden Ansprüche, **dadurch gekennzeichnet, dass** der zumindesteine Wärmetauscher durch zumindest einen Stapetscheiben-Ölkühler (2) gebildet ist.

## Claims

1. A heat exchanger filter arrangement with at least one heat exchanger, in particular an oil cooler (2), and at least one spin-on filter (3) which can be screwed on at least one screw (5), wherein at least one distributor plate (4) is provided in the flow path of a medium which flows through the filter (3) and the at least one heat exchanger, between the at least one heat exchanger and the at least one filter (3), and can be attached to an engine block (M) by means of the at least one screw (5), wherein the at least one filter (3) can be screwed on the at least one screw (5) projecting through the at least one distributor plate (4) and the at least one heat exchanger is arranged laterally spaced from the at least one screw (5) and adjacent to the at least one filter (3), **characterised in that** the at least one distributor plate (4) has at least three plate-shaped elements (4a, 4b, 4c), wherein the outer plate-shaped elements (4a and 4c) provide the inlet and outlet openings for the conveyed medium and the inner at least one plate-shaped element (4b) provides a deflection of the medium in a direction perpendicular to the inlet or outlet flow direction of the at least one medium, wherein in each case at least one inlet channel and at least one outlet channel is formed in the at least one central plate-shaped element (4b).

2. The heat exchanger filter assembly according to claim 1, **characterised in that** the at least one distributor plate (4) is at least partially formed by at least one casting (24a; 34), in particular an injection moulding or a die-cast part, in which channels are formed, wherein the channels provide a deflection of the at least one medium in a direction perpendicular to the at least one inlet or outlet flow direction of the medium.

3. The heat exchanger filter arrangement according to one of the preceding claims, **characterised in that** the at least one heat exchanger is cohesively connected to the at least one distributor plate (4) or at least a portion of the at least one distributor plate, in particular soldered or welded.

4. The heat exchanger filter arrangement according to one of the preceding claims, **characterised in that** the at least one filter (3) is screwed on the at least one distributor plate (4) in such a way that the at least one lower edge of the at least one filter housing lies on the corresponding surface of the at least one distributor plate (4) in a sealing manner.

5. The heat exchanger filter arrangement according to one of the preceding claims, **characterised in that** the at least one distributor plate (4) has at least two entry and exit openings on one side and at least four on the other side.

6. The heat exchanger filter arrangement according to one of the preceding claims, **characterised in that** at least one bypass (41; 51) to the at least one heat exchanger is formed, through which a part of a media stream which can flow through the at least one distributor plate (4) directly enters the at least one filter (3) without flowing through the at least one heat exchanger.

7. The heat exchanger filter arrangement according to one of the preceding claims, **characterised in that** the at least one heat exchanger is formed by at least one stacked plate oil cooler (2).

## Revendications

1. Agencement de filtre d'échangeur de chaleur comprenant au moins un échangeur de chaleur, en particulier un refroidisseur d'huile (2), et au moins un filtre de type spin-on (3) qui peut être vissé sur au moins une vis (5), où il est prévu, entre l'échangeur de chaleur au moins au nombre de un et le filtre (3) au moins au nombre de un, au moins une plaque de distribution (4) placée dans le trajet d'écoulement d'un milieu traversant le filtre (3) et l'échangeur de chaleur au moins au nombre de un, plaque de distribution qui peut être fixée sur un bloc-moteur (M) au moyen de la vis (5) au moins au nombre de un, où le filtre (3) au moins au nombre de un peut être vissé sur la vis (5) au moins au nombre de un traversant la plaque de distribution (4) au moins au nombre de un, et l'échangeur de chaleur au moins au nombre de un est disposé en étant latéralement à distance de la vis (5) au moins au nombre de un et à proximité du filtre (3) au moins au nombre de un, **caractérisé en ce que** la plaque de distribution (4) au moins au nombre de un présente au moins trois éléments (4a, 4b, 4c) en forme de plaque, où les éléments extérieurs (4a et 4c) en forme de plaque mettent à disposition les ouvertures d'entrée et de sortie pour le milieu en circulation, et il est prévu, dans l'élément intérieur (4b) en forme de plaque et au moins au nombre de un, un retour de flux du milieu suivant une direction perpendiculaire à la direction d'écoulement d'entrée ou de sortie du milieu au moins au nombre de un, où au moins un conduit d'entrée et au moins un conduit de sortie sont formés à chaque fois dans l'élément du milieu (4b) en forme de plaque et au moins au nombre de un.

2. Agencement de filtre d'échangeur de chaleur selon la revendication 1, **caractérisé en ce que** la plaque de distribution (4) au moins au nombre de un est formée au moins partiellement par au moins une pièce moulée (24a ; 34), en particulier une pièce moulée par injection ou une pièce moulée sous pression, pièce moulée dans laquelle sont formés des conduits, où il est prévu, dans les conduits, un retour de flux du milieu en circulation au moins au nombre de un, suivant une direction perpendiculaire à la direction d'écoulement d'entrée ou de sortie, au moins au nombre de un, du milieu.

3. Agencement de filtre d'échangeur de chaleur selon l'une des revendications précédentes, **caractérisé en ce que** l'échangeur de chaleur au moins au nombre de un est assemblé par continuité de matière, en particulier brasé ou soudé, avec la plaque de distribution (4) au moins au nombre de un ou avec au moins une partie de la plaque de distribution au moins au nombre de un.

4. Agencement de filtre d'échangeur de chaleur selon l'une quelconque des revendications précédentes, **caractérisé en ce que** le filtre (3) au moins au nombre de un est vissé sur la plaque de distribution (4) au moins au nombre de un, de manière telle que le bord inférieur au moins au nombre de un du carter de filtre au moins au nombre de un soit en appui de façon étanche sur la surface correspondante de la plaque de distribution (4) au moins au nombre de un.

5. Agencement de filtre d'échangeur de chaleur selon l'une quelconque des revendications précédentes, **caractérisé en ce que** la plaque de distribution (4) au moins au nombre de un présente, sur un côté, au moins deux et, sur l'autre côté, au moins quatre ouvertures d'entrée ou de sortie.

6. Agencement de filtre d'échangeur de chaleur selon l'une quelconque des revendications précédentes, **caractérisé en ce qu'**au moins une dérivation (41 ; 51) est formée par rapport à l'échangeur de chaleur au moins au nombre de un, dérivation à travers laquelle une partie d'un flux d'un milieu en circulation, par laquelle peut être traversée la plaque de distribution (4) au moins au nombre de un, parvient directement dans le filtre (3) au moins au nombre de un, sans traverser l'échangeur de chaleur au moins au nombre de un.

7. Agencement de filtre d'échangeur de chaleur selon l'une quelconque des revendications précédentes, **caractérisé en ce que** l'échangeur de chaleur au moins au nombre de un est formé par au moins un refroidisseur d'huile à plaques empilées (2).
